# EUROPEAN PATENT APPLICATION

(11) **EP 3 813 467 A1**
(43) Date of publication of application: **28.04.2021**
(21) Application number: 18924639.0
(22) Date of filing: 28.06.2018
(51) Int. Cl.: H04W 74/08

(54) **RESOURCE SCHEDULING METHOD, TERMINAL DEVICE, AND NETWORK DEVICE**

(71) Applicant: GUANGDONG OPPO MOBILE TELECOMMUNICATIONS CORP., LTD., Dongguan Guangdong 523860 (CN)
(72) Inventor: SHEN, Jia, Dongguan, Guangdong 523860 (CN); LIN, Yanan, Dongguan, Guangdong 523860 (CN); SHI, Cong, Dongguan, Guangdong 523860 (CN)
(74) Representative: Penza, Giancarlo
(86) International application number: PCT/CN2018/093311
(87) International publication number: WO 2020/000299

(57) **Abstract**

Disclosed are a resource scheduling method, a terminal device, and a network device. The method comprises: the terminal device receives downlink control information (DCI) sent by the network device, the DCI being used for scheduling resources on a first bandwidth part (BWP) of the terminal device currently in an activated state; the terminal device determines a subcarrier interval corresponding to a radio network temporary identity (RNTI) for scrambling the DCI, the subcarrier interval corresponding to the RNTI for scrambling the DCI being the subcarrier interval used by scheduling the resources on the first BWP. According to the method, the terminal device, and the network device in embodiments of the present application, the RNTI for scrambling the DCI indicates the subcarrier interval, so that when the type of a service to be processed changes, the terminal device can quickly switch the sub-carrier interval, thereby improving service richness and service capability of the terminal device, and improving the communication performance.

## Description

### Technical Field

The embodiments of the present application relate to the field of communication, in particular to a resource scheduling method, terminal device and network device.

### Background

In a Long Term Evolution (LTE) system, the working bandwidth and subcarrier spacing of the terminal device are single, the working bandwidth is equal to the cell system bandwidth, and the subcarrier spacing is equal to 15kHz. Therefore, the terminal device can only support common services, such as Mobile Broadband (MBB).

In the 5G standard, more abundant service types are introduced, for example, Ultra Reliable & Low Latency Communication (uRLLC) service. In the 5G standard, a variety of Numerologies, including subcarrier spacings of 15kHz, 30kHz, 60kHz, 120kHz and 240kHz, etc., are also introduced. At the same time, Bandwidth Part (BWP) is also introduced into the 5G standard. One BWP can only cover a part of the system bandwidth and only correspond to certain Numerology. A network device can configure multiple BWPs for a terminal device, and each BWP is based on one Numerology (including subcarrier spacing and cyclic prefix (CP)). At a certain time, only one BWP can be activated for one terminal device. Because different service types need different Numerologies, it is achieved by switching BWP when a service type changes. However, BWP switching needs a certain transition period, which may reach hundreds of microseconds to several milliseconds, making it impossible to switch quickly between two Numerologies, thereby greatly limiting the service richness and service capability of the terminal device.

### Summary

The embodiments of the present application provide a resource scheduling method, a terminal device and a network device, which greatly improve the service richness and service capability of the terminal device, thereby improving the communication performance.

In a first aspect, a resource scheduling method is provided, which includes: receiving, by a terminal device, downlink control information (DCI) sent by a network device, wherein the DCI is used for scheduling resources on a first bandwidth part (BWP) of the terminal device currently in an active state; and determining, by the terminal device, a subcarrier spacing corresponding to a radio network temporary identifier (RNTI) for scrambling the DCI, wherein the subcarrier spacing corresponding to the RNTI for scrambling the DCI is a subcarrier spacing used for scheduling the resources on the first BWP.

In a second aspect, a resource scheduling method is provided, which includes: determining, by a network device, a subcarrier spacing used for scheduling resources on a first bandwidth part (BWP) of a terminal device currently in an active state according to a type of a current service to be processed; and sending, by the network device, downlink control information (DCI) to the terminal device, wherein the DCI is used for scheduling resources on the first BWP, and a radio network temporary identifier (RNTI) for scrambling the DCI is used for indicating the subcarrier spacing used for scheduling the resources on the first BWP.

In a third aspect, a terminal device is provided, which is used for performing the method in the first aspect or various implementations thereof.

Specifically, the terminal device includes functional modules for performing the method in the first aspect or various implementations thereof.

In a fourth aspect, a network device is provided, which is used for performing the method in the second aspect or various implementations thereof.

Specifically, the terminal device includes functional modules for performing the method in the second aspect or various implementations thereof.

In a fifth aspect, a terminal device is provided, which includes a processor and a memory. The memory is used for storing a computer program, and the processor is used for calling and running the computer program stored in the memory to perform the method in the first aspect or various implementations thereof.

In a sixth aspect, a network device is provided, which includes a processor and a memory.

The memory is used for storing a computer program, and the processor is used for calling and running the computer program stored in the memory to perform the method in the second aspect or various implementations thereof.

In a seventh aspect, a chip is provided, which is used for performing the method in any one of the first to the second aspects or various implementations thereof.

Specifically, the chip comprises a processor for calling and running a computer program from the memory such that the device in which the chip is installed performs the method in any one of the first to the second aspects or various implementations thereof.

In an eighth aspect, a computer readable storage medium is provided, which is used for storing a computer program that enables a computer to perform the method in any one of the first to the second aspects or various implementations thereof.

In a ninth aspect, a computer program product is provided, which includes computer program instructions that enable a computer to perform the method in any one of the first to the second aspects or various implementations thereof.

In a tenth aspect, a computer program is provided, and the program, when being run on a computer, enables the computer to perform the method in any one of the first to the second aspects or various implementations thereof.

According to the above technical solution, the RNTI for scrambling the DCI indicates a subcarrier spacing, so that when the type of a service to be processed changes, the terminal device can quickly switch the subcarrier spacing, thereby greatly improving service richness and service capability of the terminal device, and improving the communication performance.

### Brief Description of Drawings

FIG. 1 is a schematic diagram of architecture of a communication system provided by an embodiment of the present application.
FIG. 2 is a schematic diagram of a signal transmission method provided by an embodiment of the present application.
FIG. 3 is a schematic block diagram of a terminal device provided by an embodiment of the present application.
FIG. 4 is a schematic block diagram of a network device provided by an embodiment of the present application.
FIG. 5 is a schematic block diagram of a communication device provided by an embodiment of the present application.
FIG. 6 is a schematic block diagram of a chip provided by an embodiment of the present application.
FIG. 7 is a schematic block diagram of a communication system provided by an embodiment of the present application.

### Detailed Description

The technical solution in embodiments of the present application will be described below with reference to the drawings in embodiments of the present application. It is apparent that the embodiments described are just some embodiments of the present application, but not all embodiments of the present application. According to the embodiments of the present application, all other embodiments achieved by a person of ordinary skill in the art without paying inventive efforts are within the protection scope of the present application.

The technical solution of embodiments of the present application may be applied to various communication systems, such as, a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, an LTE Time Division Duplex (TDD) system, a Universal Mobile Telecommunication System (UMTS) system, a Worldwide Interoperability for Microwave Access (WiMAX) communication system, or a 5G system.

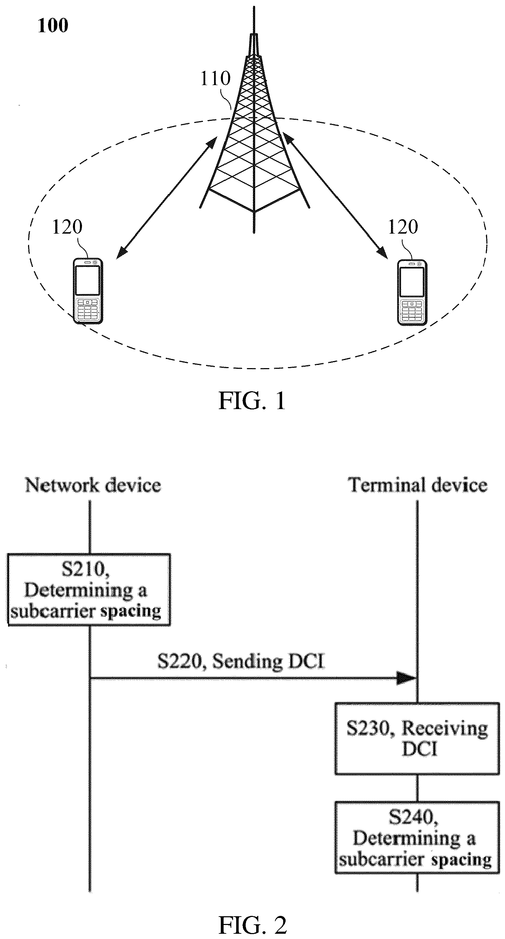

Illustratively, a communication system 100 applied in an embodiment of the present application is shown in FIG. 1. The communication system 100 may include a network device 110, and the network device 110 may be a device that communicates with a terminal device 120 (or referred to as a communication terminal, or a terminal). The network device 110 may provide communication coverage for a specific geographical area, and may communicate with a terminal device located within the coverage area. Optionally, the network device 110 may be a Base Transceiver Station (BTS) in a GSM system or CDMA system, a NodeB (NB) in a WCDMA system, an Evolutional Node B (eNB or eNodeB) in a LTE system, or a radio controller in a Cloud Radio Access Network (CRAN), or the network device may be a network side device in a mobile switch center, a relay station, an access point, a vehicle-mounted device, a wearable device, a hub, a switch, a bridge, a router, or a 5G network, or a network device in a future evolved Public Land Mobile Network (PLMN).

The communication system 100 also includes at least one terminal device 120 located within the coverage area of the network device 110. The "terminal device" as used herein includes but is not limited to user equipment (User Equipment, UE), an access terminal, a user unit, a user station, a mobile site, a mobile station, a remote station, a remote terminal, a mobile device, a user terminal, a terminal, a wireless communications device, a user agent, or a user apparatus. An access terminal may be a cellular phone, a cordless phone, a session initiation protocol (SIP) phone, a wireless local loop (WLL) station, a personal digital assistant (PDA), a handheld device with a wireless communication function, a computing device or other processing device connected to a wireless modem, an on-board device, a wearable device, a terminal device in a future 5G network, or a terminal device in a future evolved Public Land Mobile Network (PLMN), which is not restricted in embodiments of the present invention.

Optionally, Device to Device (D2D) communication may be performed between the terminal devices 120.

Optionally, the 5G system or 5G network may be referred to as a New Radio (NR) system or a NR network.

FIG. 1 exemplifies one network device and two terminal devices. Optionally, the communication system 100 may include a plurality of network devices, and other number of terminal devices may be included within the coverage area of each network device, which is not limited in embodiments of the present application.

Optionally, the communication system 100 may also include other network entities such as a network controller, and a mobile management entity, which is not limited in embodiments of the present application.

It should be understood that, a device with a communication function in a network/system in the embodiments of the present application may be referred to as a communication device. In the communication system 100 shown in FIG. 1 as an example, communication devices may include a network device 110 and a terminal device 120 which have communication functions, and the network device 110 and the terminal device 120 may be the specific devices as described above, which will not be described here again. Communication devices may also include other devices in the communication system 100, such as other network entities including network controllers, mobile management entities, or the like, which is not limited in embodiments of the present application.

It should be understood that the terms "system" and "network" are often used interchangeably in this document. The term "and/or" in this document is merely an association relationship describing associated objects, indicating that there may be three relationships, for example, A and/or B may indicate three cases: A alone, A and B, and B alone. In addition, the symbol "/" in this document generally indicates that objects before and after the symbol "/" have an "or" relationship.

In the LTE system, both the working bandwidth and the subcarrier spacing of the terminal device are single, the working bandwidth is equal to the cell system bandwidth, and the subcarrier spacing =15 kHz. Therefore, the terminal device can only support common services, such as MBB.

With the introduction of more abundant service types in 5G standard, such as enhanced Mobile Broadband (eMBB), uRLLC service, massive Machine Type of Communication (MMTC) or the like, the single subcarrier spacing in LTE system can no longer meet the communication requirements. Therefore, in order to maintain the flexibility and forward compatibility of the system, a variety of Numerologies are introduced into 5G standard, which can include at least one of the following parameters: the subcarrier spacing, the number of subcarriers under a specific bandwidth, the number of subcarriers in a physical resource block (PRB), the length of orthogonal frequency division multiplexing (OFDM) symbols, the number of points of Fourier transform such as Fast Fourier Transform (FFT) or Inverse Fourier Transform such as Inverse Fast Fourier Transform (IFFT) used to generate an OFDM signal, the number of OFDM symbols in Transmission Time Interval (TTI), the number of TTIs included in a specific time length and the length of signal prefix.

The subcarrier spacing refers to frequency spacing between adjacent subcarriers, such as 15 kHz or 60 kHz. The number of subcarriers under a specific bandwidth is, for example, the number of subcarriers corresponding to each possible system bandwidth. The number of subcarriers included in the PRB may be, for example, an integer multiple of 12. The number of OFDM symbols included in the TTI may be, for example, an integer multiple of 14 typically. The number of TTIs included in a certain time unit may refer to the number of TTIs included in a time length of 1 ms or 10 ms. The signal prefix length is, for example, the time length of the cyclic prefix of the signal, or refers to whether the cyclic prefix adopts a regular CP or an extended CP.

At the same time, BWP is also introduced into 5G standard. One BWP can only cover a part of the system bandwidth and correspond only to a certain Numerology. The network device can configure multiple BWPs for the terminal device through Radio Resource Control (RRC), and each BWP is based on one Numerology (including a subcarrier spacing and a cyclic prefix). At a certain time, only one BWP can be activated for one terminal device. That is, when a new BWP is activated, the original BWP is deactivated. The network device can dynamically activate or deactivate a BWP through Download Control Information (DCI).

When the service type changes, the required Numerology also needs to change. At present, the existing solution is implemented by switching BWP. However, BWP switching requires a certain transition period, which may reach hundreds of microseconds to several milliseconds. In the transition period of BWP switching, it is possible that neither the original BWP nor the new BWP can be used. Therefore, it is impossible to quickly switch between multiple Numerologies, and it is even more impossible to schedule resources of multiple subcarrier spacings at the same time. This greatly limits the service richness and service capability of the 5G terminal device.

FIG. 2 is a schematic flow chart of a resource scheduling method 200 provided by an embodiment of the present application. As shown in FIG. 2, the method 200 includes some or all of following contents.

S210, a network device determines a subcarrier spacing used for scheduling resources on a first BWP of a terminal device currently in an active state according to a type of a current service to be processed.

S220, the network device sends DCI to the terminal device, and the DCI is used for scheduling resources on the first BWP, and the radio network temporary identifier (RNTI) for scrambling the DCI is used for indicating a subcarrier spacing used for scheduling resources on the first BWP.

S230, the terminal device receives DCI sent by the network device, and the DCI is used for scheduling resources on the first bandwidth part (BWP) of the terminal device currently in the active state.

S240, the terminal device determines the subcarrier spacing corresponding to the radio network temporary identity (RNTI) for scrambling the DCI, and the subcarrier spacing corresponding to the RNTI for scrambling the DCI is the subcarrier spacing used for scheduling resources on the first BWP.

Specifically, the network device can configure a variety of BWPs for the terminal device. When a BWP is in an active state, the network device can determine the subcarrier spacing used for scheduling resources on the BWP according to the type of a current service to be processed. It should be understood that since different services require different Numerologies, other parameters in the Numerology can also be used here, such as cyclic prefix (CP). That is to say, the network device can determine the CP used for scheduling resources on the BWP according to the type of a current service to be processed, which is not limited here. The network device can configure a mapping relationship between multiple RNTIs and multiple subcarrier spacings in advance. Thus, once the network device determines the subcarrier spacing used, DCI can be scrambled with the RNTI corresponding to the subcarrier spacing, and then the scrambled DCI can be sent to the terminal device. Here, DCI can be used for scheduling resources on BWP. After receiving the DCI, the terminal device can first determine the corresponding subcarrier spacing according to RNTI for scrambling the DCI, and use the subcarrier spacing to transmit the current service to be processed with the network device on the resources indicated by the DCI. When the type of the service to be processed changes, the above steps S210∼S240 can be repeatedly performed.

Therefore, according to the resource scheduling method of the embodiment of the present application, the RNTI for scrambling the DCI indicates the subcarrier spacing, so that when the type of the service to be processed changes, the terminal device can quickly switch the subcarrier spacing, thereby greatly improving service richness and service capability of the terminal device, and improving the communication performance.

It should be understood that the first BWP may be an uplink BWP, that is, the DCI may be a signaling for scheduling uplink resources. The first BWP may also be a downlink BWP, that is, the DCI may be a signaling for scheduling downlink resources. When the first BWP is an uplink BWP, the terminal device can transmit services to the network device on the resources indicated by DCI, or when the first BWP is a downlink BWP, the terminal device can receive services transmitted by the network device on the resources indicated by DCI.

Optionally, in an embodiment of the present application, the network device determines a subcarrier spacing used for scheduling resources on the first bandwidth part (BWP) of the terminal device currently in an active state according to a type of a current service to be processed, which includes: determining the first subcarrier spacing as the subcarrier spacing used for scheduling resources on the first BWP if the current service to be processed is an eMBB service, and determining a second subcarrier spacing as the subcarrier spacing used for scheduling resources on the first BWP if the current service to be processed is a uRLLC service; and the second subcarrier spacing is larger than the first subcarrier spacing.

Since small subcarrier spacing has higher spectrum efficiency, it is more suitable for transmitting ordinary eMBB services; while large subcarrier spacing is more conducive to the service with lower transmission delay. It should be noted that two services, eMBB and URLLC, are taken as examples here, but the embodiments of the present application are not limited to them. For example, in the future, if services are divided into finer categories according to the required subcarrier spacing, they are also applicable to the embodiments of the present application.

Optionally, in an embodiment of the present application, before the network device sends downlink control information (DCI) to the terminal device, the method further includes: the network device sends configuration parameters of the first BWP to the terminal device, the configuration parameters include multiple subcarrier spacings, and different subcarrier spacings correspond to different RNTIs. Similarly, before the terminal device receives the downlink control information (DCI) sent by the network device, the method further includes: the terminal device receives configuration parameters of the first BWP, the configuration parameters include multiple subcarrier spacings, and different subcarrier spacings correspond to different RNTIs; the terminal device determines the subcarrier spacing used for scheduling resources on the first BWP according to the radio network temporary identifier (RNTI) for scrambling the DCI, which includes: the terminal device determines the subcarrier spacing corresponding to the RNTI for scrambling the DCI among the multiple subcarrier spacings.

As mentioned earlier, the network device can configure multiple BWPs for the terminal device, each BWP has corresponding configuration parameters, and each of the configuration parameters of the BWP corresponds to a subcarrier spacing. That is, each BWP will be configured with one subcarrier spacing. In the embodiment of the present application, the configuration parameters of BWP can be modified so that the configuration parameters include multiple subcarrier spacings. Moreover, the network device can configure the mapping relationship between the multiple subcarrier spacings and RNTIs, so that once the terminal device receives the DCI, it can determine the corresponding subcarrier spacing according to the RNTI for scrambling the DCI.

For example, the configuration parameters of the first BWP include a first subcarrier spacing and a second subcarrier spacing, the first subcarrier spacing corresponds to the first RNTI, and the second subcarrier spacing corresponds to the second RNTI. The network device selects a subcarrier spacing from the first subcarrier spacing and the second subcarrier spacing according to the current service, and scrambles the DCI using the corresponding RNTI. After the terminal device receives the scrambled DCI, it can determine which subcarrier spacing it is according to the RNTI for scrambling the DCI. If the first RNTI is used to scramble DCI, the terminal device can determine that it is the first subcarrier spacing, and if the second RNTI is used to scramble DCI, the terminal device can determine that it is the second subcarrier spacing.

Optionally, in an embodiment of the present application, before the network device sends downlink control information (DCI) to the terminal device, the method further includes: the network device sends configuration parameters of the first BWP to the terminal device, and the configuration parameters include a first subcarrier spacing, which corresponds to a first RNTI. And the network device sends first configuration information to the terminal device, and the first configuration information is used for indicating at least one subcarrier spacing, the at least one subcarrier spacing corresponds to at least one RNTI one by one, and the at least one RNTI is an RNTI other than the first RNTI. Similarly, before the terminal device receives the downlink control information (DCI) sent by the network device, the method further includes: the terminal device receives configuration parameters of the first BWP, and the configuration parameters include a first subcarrier spacing, which corresponds to a first RNTI. And the terminal device receives first configuration information, which is used for indicating at least one subcarrier spacing, the at least one subcarrier spacing corresponds to at least one RNTI one by one, and the at least one RNTI is an RNTI other than the first RNTI. The terminal device determines the subcarrier spacing used for scheduling resources on the first BWP according to the radio network temporary identifier (RNTI) for scrambling the DCI, which includes: the terminal device determines the subcarrier spacing corresponding to the RNTI for scrambling the DCI among the first subcarrier spacing and the at least one subcarrier spacing.

As mentioned earlier, the network device can configure multiple BWPs for the terminal device, each BWP has corresponding configuration parameters, and each of the configuration parameters of the BWP corresponds to a subcarrier spacing. That is, each BWP will be configured with one subcarrier spacing. In the embodiment of the present application, the network device may further separately configure subcarrier spacings corresponding to other RNTIs for the terminal device. Furthermore, the network device can configure the first subcarrier spacing and subsequently configure a mapping relationship between the at least one subcarrier spacing and the RNTI, so that once the terminal device receives the DCI, it can determine the corresponding subcarrier spacing according to the RNTI for scrambling the DCI.

For example, if the configuration parameters of the first BWP include a first subcarrier spacing, the network device will configure a second subcarrier spacing for the terminal device through a separate signaling, and the first subcarrier spacing corresponds to the first RNTI and the second subcarrier spacing corresponds to the second RNTI. The network device selects a subcarrier spacing from the first subcarrier spacing and the second subcarrier spacing according to the current service, and scrambles the DCI using the corresponding RNTI. After the terminal device receives the scrambled DCI, it can determine which subcarrier spacing it is according to the RNTI for scrambling the DCI. If the first RNTI is used to scramble DCI, the terminal device can determine that it is the first subcarrier spacing, and if the second RNTI is used to scramble DCI, the terminal device can determine that it is the second subcarrier spacing.

It should be noted that the at least one subcarrier spacing indicated by the network device to the terminal device through the first configuration information may make no distinction between BWPs, that is to say, it is applicable to all BWPs of the terminal device, or it may be configured separately for each BWP of the terminal device. It is not limited here.

Compared with the above embodiment by modifying the configuration parameters of BWP, this embodiment can maintain compatibility with the existing 5G technology.

Optionally, in an embodiment of the present application, before the network device sends downlink control information (DCI) to the terminal device, the method further includes: the network device sends configuration parameters of the first BWP to the terminal device, and the configuration parameters include a first subcarrier spacing, which corresponds to a first RNTI; the network device sends first configuration information to the terminal device, and the first configuration information is used for indicating the mapping relationship between each of the at least one subcarrier spacing and the first subcarrier spacing, the at least one subcarrier spacing corresponds to at least one RNTI one by one, and the at least one RNTI is an RNTI other than the first RNTI.

As mentioned earlier, the network device can configure multiple BWPs for the terminal device, each BWP has corresponding configuration parameters, and each of the configuration parameters of the BWP corresponds to a subcarrier spacing. That is, each BWP will be configured with one subcarrier spacing. In the embodiment of the present application, the mapping relationship between other subcarrier spacings and the subcarrier spacings included in the configuration parameters may be predefined or configured by the network device. Each subcarrier spacing in the other subcarrier spacings corresponds to one RNTI, respectively. The network device may further configure a mapping relationship between RNTIs and the first subcarrier spacing and the subcarrier spacing corresponding to the first subcarrier spacing, so that once the terminal device receives the DCI, it can determine the corresponding subcarrier spacing according to the RNTI for scrambling the DC.

For example, if the configuration parameters of the first BWP include a first subcarrier spacing, the subcarrier spacing mapped with the first subcarrier spacing is a second subcarrier spacing, the first subcarrier spacing corresponds to the first RNTI and the second subcarrier spacing corresponds to the second RNTI. The network device selects a subcarrier spacing from the first subcarrier spacing and the second subcarrier spacing according to the current service, and scrambles the DCI using the corresponding RNTI. After the terminal device receives the scrambled DCI, it can determine which subcarrier spacing it is according to the RNTI for scrambling the DCI. If the first RNTI is used to scramble DCI, the terminal device can determine that it is the first subcarrier spacing, and if the second RNTI is used to scramble DCI, the terminal device can determine that it is the second subcarrier spacing.

Optionally, a mapping table between the candidate values of the first subcarrier spacing and the candidate values of the second subcarrier spacing, which can be predefined or configured by the network device, is as shown in Table 1.

**Table 1**

| | Subcarrier spacing corresponding to RNTI 1 | Subcarrier spacing corresponding to RNTI 2 |
|---|---|---|
| Correspondence 1 | 15kHz | 60kHz |
| Correspondence 2 | 30kHz | 120kHz |
| Correspondence 3 | 60kHz | 120kHz |
| Correspondence 4 | 120kHz | 240kHz |
| Correspondence 5 | 240kHz | 240kHz |

For example, if the subcarrier spacing corresponding to RNTI1 included in the configuration parameters of the first BWP is 15kHz, the terminal device can determine that the subcarrier spacing corresponding to RNTI2 is 60kHz according to the correspondence 1 in the above table. Then, after the terminal device receives the DCI scrambled by RNTI1, the subcarrier spacing of 15kHz can be used, and after the terminal device receives the DCI scrambled by RNTI2, the subcarrier spacing of 60kHz can be used. Similarly, when the subcarrier spacing corresponding to RNTI1 is 30kHz, 60kHz, 120kHz and 240kHz, the subcarrier spacing corresponding to RNTI2 can also be determined to be 120kHz, 120kHz, 240kHz and 240kHz, respectively according to the above table.

Optionally, the multiple relationship between the candidate values of the first subcarrier spacing and the candidate values of the second subcarrier spacing may be predefined or configured by the network device, that is, the second subcarrier spacing may be derived from the first subcarrier spacing. For example, second subcarrier spacing =N* first subcarrier spacing, where N may be a positive number predefined or configured by the network device, and for example, N may be 2, 4 or 8. It should be understood that n may also be 1/2, 1/4, etc.

Optionally, in an embodiment of the present application, before the terminal device receives the downlink control information (DCI) sent by the network device, the method further includes: the terminal device receives second configuration information, which is used for indicating that the at least one RNTI can be used.

That is to say, the network device may indicate in advance whether subcarrier spacings other than the configuration parameters can be used. Taking the above as an example, the terminal device may indicate whether the second RNTI can be used or not through the second configuration information. Specifically, when the value of the second configuration information is a first numerical value, it indicates that the second RNTI is not used, for example, the first numerical value is 0. And when the value of the second configuration information is a second numerical value, it indicates that the second RNTI is used, for example, the second numerical value is 1.

Optionally, in an embodiment of the present application, the first RNTI may be a Cell Radio Network Temporary Identifier (C-RNTI), and the second RNTI may be another RNTI other than the C-RNTI, for example, it may be Configured Scheduling RNTI (CS-RNTI), Interruption RNTI (INT-RNTI), Slot Format Indication RNTI (SFI-RNTI), Semi-Persistent Channel State Information RNTI (SP-CSI-RNTI), or Transmit Power Control-Sounding Reference Symbols-RNTI (TPC-SRS-RNTI). The second RNTI may be Y-RNTI, Modulation and Coding Scheme -C-RNTI (MCS-C-RNTI), D-RNTI, Temp-RNTI, or Cell Reliability-RNTI (CR-RNTI) as defined in the current standards or the RNTIs possibly appear in future standards.

It should be understood that in various embodiments of the present application, sequence numbers of the various processes do not imply an order of execution of the various processes, which should be determined by their functions and internal logics, and should not constitute any limitation on implementation processes of the embodiments of the present application.

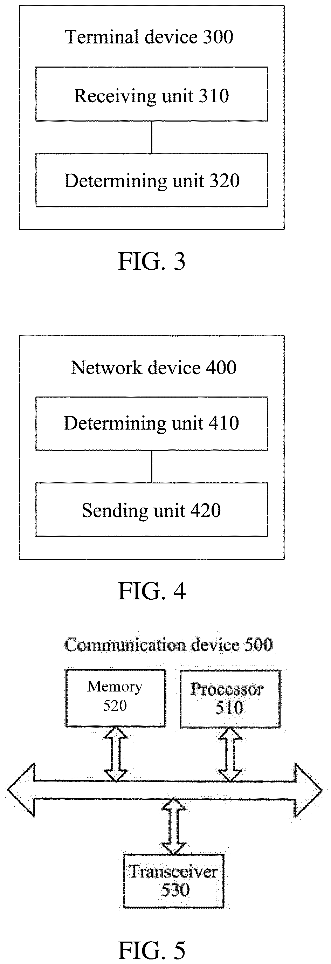

The resource scheduling method according to the embodiments of the present invention has been described in detail above, and a resource scheduling device according to embodiments of the present invention will be described below with reference to FIGs. 3 to 6. The technical features described in the method embodiments are applicable to following device embodiments.

FIG. 3 shows a schematic block diagram of a terminal device 300 of an embodiment of the present application. As shown in FIG. 3, the terminal device 300 includes:
a receiving unit 310 configured to receive downlink control information (DCI) sent by a network device, and the DCI is used for scheduling resources on the first bandwidth part (BWP) of the terminal device currently in an active state; and
a determining unit 320, configured to determine a subcarrier spacing corresponding to a radio network temporary identifier (RNTI) for scrambling the DCI, and the subcarrier spacing corresponding to the RNTI for scrambling the DCI is the subcarrier spacing used for scheduling resources on the first BWP.

Optionally, in an embodiment of the present application, the receiving unit further includes: receiving configuration parameters of the first BWP, and the configuration parameters include multiple subcarrier spacings, and different subcarrier spacings correspond to different RNTIs. The determining unit is specifically configured to determine a subcarrier spacing corresponding to the RNTI for scrambling the DCI among the multiple subcarrier spacings.

Optionally, in an embodiment of the present application, the receiving unit is further configured to receive configuration parameters of the first BWP, and the configuration parameters include a first subcarrier spacing, and the first subcarrier spacing corresponds to a first RNTI; and receive first configuration information, and the first configuration information is used for indicating at least one subcarrier spacing, and the at least one subcarrier spacing corresponds to at least one RNTI one by one, and the at least one RNTI is an RNTI other than the first RNTI. The determining unit is specifically configured to determine a subcarrier spacing corresponding to the RNTI for scrambling the DCI among the first subcarrier spacing and the at least one subcarrier spacing.

Optionally, in an embodiment of the present application, the at least one subcarrier spacing is configured by the network device for the first BWP.

Optionally, in an embodiment of the present application, the receiving unit is further configured to receive configuration parameters of the first BWP, and the configuration parameters include a first subcarrier spacing, and the first subcarrier spacing corresponds to a first RNTI; and receive first configuration information, and the first configuration information is used for indicating the mapping relationship between each subcarrier spacing of the at least one subcarrier spacing and the first subcarrier spacing, and the at least one subcarrier spacing corresponds to at least one RNTI one by one, and the at least one RNTI is an RNTI other than the first RNTI. The determining unit is specifically configured to determine a subcarrier spacing corresponding to the RNTI for scrambling the DCI among the first subcarrier spacing and the at least one subcarrier spacing.

Optionally, in an embodiment of the present application, if the RNTI for scrambling the DCI is the second RNTI among the at least one RNTI, the determining unit is further configured to determine a second subcarrier spacing corresponding to the second RNTI according to the first subcarrier spacing and the mapping relationship. The determining unit is specifically configured to determine the second subcarrier spacing as the subcarrier spacing used for scheduling resources on the first BWP.

Optionally, in an embodiment of the present application, the mapping relationship is represented by a mapping table predefined or configured by the network device, or the mapping relationship is represented by a multiple or fractional relationship predefined or configured by the network device.

Optionally, in an embodiment of the present application, the receiving unit is further configured to receive second configuration information, which is used for indicating that the at least one RNTI can be used.

Optionally, in an embodiment of the present application, the type of the first RNTI is different from that of the at least one RNTI, and the first RNTI is a C-RNTI.

Optionally, in an embodiment of the present application, the first BWP is an uplink BWP or a downlink BWP.

It should be understood that the terminal device 300 according to the embodiment of the present application may correspond to the terminal device in the method embodiment of the present application, and the above-mentioned operations and/or functions and other operations and/or functions of various units in the terminal device 300 are respectively for implementing the corresponding processes of the terminal device in the method shown in FIG. 2, which will not be repeated here for brevity.

FIG. 4 shows a schematic block diagram of a network device 400 according to an embodiment of the present application. As shown in FIG. 4, the network device 400 includes:
a determining unit 410, configured to determine a subcarrier spacing used for scheduling resources on the first bandwidth part (BWP) of the terminal device currently in an active state according to the type of a current service to be processed; and
a sending unit 420, configured to send downlink control information (DCI) to the terminal device, and the DCI is used for scheduling resources on the first BWP, and the radio network temporary identifier (RNTI) for scrambling the DCI is used for indicating the subcarrier spacing used for scheduling resources on the first BWP.

Optionally, in an embodiment of the present application, the sending unit is further configured to send configuration parameters of the first BWP to the terminal device, and the configuration parameters include multiple subcarrier spacings, and different subcarrier spacings correspond to different RNTIs.

Optionally, in an embodiment of the present application, the sending unit is further configured to send configuration parameters of the first BWP to the terminal device, and the configuration parameters include a first subcarrier spacing, and the first subcarrier spacing corresponds to a first RNTI; and send first configuration information to the terminal device, and the first configuration information is used for indicating at least one subcarrier spacing, the at least one subcarrier spacing corresponds to at least one RNTI one by one, and the at least one RNTI is an RNTI other than the first RNTI.

Optionally, in an embodiment of the present application, the at least one subcarrier spacing is configured by the network device for the first BWP.

Optionally, in an embodiment of the present application, the sending unit is further configured to send configuration parameters of the first BWP to the terminal device, and the configuration parameters include a first subcarrier spacing, and the first subcarrier spacing corresponds to a first RNTI; and send first configuration information to the terminal device, and the first configuration information is used for indicating the mapping relationship between each subcarrier spacing of the at least one subcarrier spacing and the first subcarrier spacing, the at least one subcarrier spacing corresponds to at least one RNTI one by one, and the at least one RNTI is an RNTI other than the first RNTI.

Optionally, in an embodiment of the present application, the mapping relationship is represented by a mapping table predefined or configured by the network device, or the mapping relationship is represented by a multiple or fractional relationship predefined or configured by the network device.

Optionally, in an embodiment of the present application, the sending unit is further configured to send second configuration information to the terminal device, and the second configuration information is used for indicating that the at least one RNTI can be used.

Optionally, in an embodiment of the present application, the type of the first RNTI is different from that of the at least one RNTI, and the first RNTI is a C-RNTI.

Optionally, in an embodiment of the present application, the determining unit is specifically configured to determine the first subcarrier spacing as the subcarrier spacing used for scheduling resources on the first BWP if the current service to be processed is an enhanced mobile broadband (eMBB) service; and determine the second subcarrier spacing as the subcarrier spacing used for scheduling resources on the first BWP if the current service to be processed is an ultra reliable & low latency communication (URLLC) service, and the second subcarrier spacing is larger than the first subcarrier spacing.

Optionally, in an embodiment of the present application, the first BWP is an uplink BWP or a downlink BWP.

It should be understood that the network device 400 according to the embodiment of the present application may correspond to the network device in the method embodiment of the present application, and the above-mentioned operations and/or functions and other operations and/or functions of various units in the device 400 are respectively for implementing the corresponding processes of the network device in the method shown in FIG. 2, and will not be repeated here for the sake of brevity.

FIG. 5 is a schematic structural diagram of a communication device 500 provided by an embodiment of the present application. The communication device 500 shown in FIG. 5 includes a processor 510. The processor 510 can call and run a computer program from a memory to implement the method in the embodiments of the present application.

Optionally, as shown in FIG. 5, the communication device 500 may further include a memory 520. The processor 510 can call and run a computer program from the memory 520 to implement the method in the embodiments of the present application.

The memory 520 may be a separate device independent of the processor 510 or may be integrated in the processor 510.

Optionally, as shown in FIG. 5, the communication device 500 may further include a transceiver 530, and the processor 510 may control the transceiver 530 to communicate with other devices. Specifically, the transceiver 630 may send information or data to other devices or receive information or data sent by other devices.

The transceiver 530 may include a transmitter and a receiver. The transceiver 530 may further include antennas, and the number of antennas may be one or more.

Optionally, the communication device 500 may specifically be a network device of the embodiment of the present application, and the terminal device 500 may implement the corresponding processes implemented by the network device in various methods of the embodiments of the present application, which will not be repeated here for brevity.

Optionally, the communication device 500 may specifically be a terminal device of the embodiment of the present application, and the communication device 500 may implement the corresponding processes implemented by the mobile terminal/terminal device in the various methods of the embodiments of the present application, which will not be repeated here for brevity.

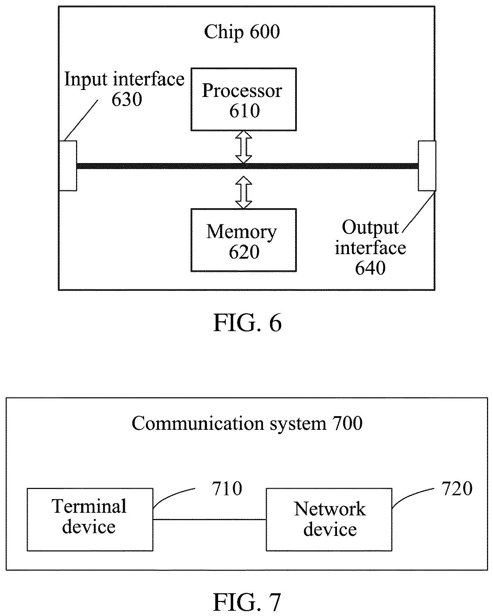

FIG. 6 is a schematic structural diagram of a chip of an embodiment of the present application. The chip 600 shown in FIG. 6 includes a processor 610. The processor 610 may call and run a computer program from a memory to implement the method in the embodiments of the present application.

Optionally, as shown in FIG. 6, the chip 600 may further include a memory 620. The processor 610 may call and run a computer program from the memory 620 to implement the method in the embodiments of the present application.

The memory 620 may be a separate device independent of the processor 610 or may be integrated in the processor 610.

Optionally, the chip 600 may further include an input interface 630. The processor 610 may control the input interface 630 to communicate with other devices or chips. Specifically, the processor 610 may acquire information or data sent by other devices or chips.

Optionally, the chip 600 may further include an output interface 640. The processor 610 may control the output interface 640 to communicate with other devices or chips. Specifically, the processor 610 may output information or data to other devices or chips.

Optionally, the chip may be applied in a network device of the embodiment of the present application, and the chip may implement the corresponding processes implemented by the network device in various methods of the embodiments of the present application, which will not be repeated here for brevity.

Optionally, the chip may be applied in a terminal device of the embodiments of the present application, and the chip may implement the corresponding processes implemented by the mobile terminal/terminal device in the various methods of the embodiments of the present application, which will not be repeated here for brevity.

It should be understood that the chip mentioned in the embodiment of the present application may be referred to as a system-level chip, a system chip, a chip system or a system-on-chip and the like.

FIG. 7 is a schematic block diagram of a communication system 700 provided by an embodiment of the present application. As shown in FIG. 7, the communication system 700 includes a terminal device 710 and a network device 720.

The terminal device 710 may be configured to implement the corresponding functions implemented by the terminal device in the above-mentioned method, and the network device 720 may be configured to implement the corresponding functions implemented by the network device in the above-mentioned method, which will not be repeated here for brevity.

It should be understood that, the processor in the embodiment of the present application may be an integrated circuit chip having a signal processing capability. In an implementation process, the steps of the foregoing method embodiments may be implemented by using an integrated logic circuit of hardware in the processor or instructions in a form of software. The processor may be a general purpose processor, a Digital Signal Processing (DSP), an Application Specific Integrated Circuit (ASIC), a Field Programmable Gate Array (FPGA) or other programmable logic devices, a discrete gate or a transistor logic device, or a discrete hardware component. The processor may implement or perform various methods, steps and logical block diagrams disclosed in the embodiments of the present application. The general purpose processor may be a microprocessor, or the processor may alternatively be any conventional processor. The steps of the method disclosed with reference to the embodiments of the present application may be directly implemented by a hardware decoding processor, or may be implemented by a combination of hardware and software modules in the decoding processor. The software module may be located in mature storage mediums in the field, such as a random access memory, a flash memory, a read-only memory, a programmable read-only memory, an electrically erasable programmable memory, or a register. The storage medium is located in the memory, and the processor reads information in the memory and completes the steps of the above-mentioned method in combination with hardware thereof.

It may be understood that, the memory in the embodiment of the present application may be a transitory memory or a non-transitory memory, or may include both a transitory memory and a non-transitory memory. The non-transitory memory may be a Read-Only memory (ROM), a Programmable ROM (PROM), an Erasable PROM (EPROM), an Electrically Erasable Programmable Read-Only Memory (EEPROM), or a flash memory. The transitory memory may be a Random Access memory (RAM), which is used as an external cache. Through exemplary but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), and a direct Rambus random access memory (DR RAM). It should be noted that the memories in the system and method described herein are intended to include, but not limited to, these and any other suitable types of memory.

It should be understood that, the foregoing memory is an example for illustration and should not be construed as limiting. For example, the memory in the embodiment of the present application may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM), a Direct Rambus RAM (DR RAM), or the like. That is, the memories in the embodiment of the present application are intended to include, but not limited to, these and any other suitable types of memory.

An embodiment of the present application further provides a computer readable storage medium configured to store a computer program.

Optionally, the computer readable memory medium may be applied in a network device of the embodiment of the present application, and the computer program enables the computer to perform the corresponding processes implemented by the network device in various methods of the embodiments of the present application, which will not be repeated here for brevity.

Optionally, the computer readable storage medium may be applied in a terminal device of the embodiment of the present application, and the computer program enables the computer to perform the corresponding processes implemented by the mobile terminal/terminal device in various methods of the embodiments of the present application, which will not be repeated here for brevity.

An embodiment of the present application also provides a computer program product including computer program instructions.

Optionally, the computer program product may be applied in a network device of the embodiment of the present application, and the computer program instructions enable the computer to perform the corresponding processes implemented by the network device in various methods of the embodiments of the present application, which will not be repeated here for brevity.

Optionally, the computer program product may be applied in a terminal device of the embodiment of the present application, and the computer program instructions enable the computer to perform the corresponding processes implemented by the mobile terminal/terminal device in various methods according to the embodiments of the present application, which will not be repeated here for brevity.

An embodiment of the present application also provides a computer program.

Optionally, the computer program may be applied in a network device of the embodiment of the present application. When the computer program is run on the computer, the computer is enabled to perform the corresponding processes implemented by the network device in various methods of the embodiments of the present application, which will not be repeated here for brevity.

Optionally, the computer program may be applied in a terminal device of the embodiment of the present application. When the computer program is run on the computer, the computer is enabled to perform the corresponding processes implemented by the mobile terminal/terminal device in various methods of the embodiments of the present application, which will not be repeated here for brevity.

A person of ordinary skill in the art may be aware that, in combination with the units and algorithm steps of the various examples described in the embodiment disclosed therein, the present application may be implemented by using electronic hardware or a combination of computer software and electronic hardware. Whether the functions are implemented by using hardware or software depends on a particular application and a design constraint condition of the technical solution. A person skilled in the art may use different methods to implement the described functions for each particular application, but it should not be considered that the implementation goes beyond the scope of the present application.

A person skilled in the art may clearly understand that, for the purpose of convenient and brief description, a corresponding process in the foregoing method embodiments can be referred to for a detailed working process of the foregoing system, apparatus, and unit. And details are not described herein again.

In the several embodiments provided in the present application, it should be understood that the disclosed system, device, and method may be implemented in other manners. For example, the device embodiments are only illustrative, for example, division of the units is only a logical function division, and there may be other division manners in actual realization. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, various functional units in various embodiments of the present application may be integrated in one processing unit, or various units may be physically present separately, or two or more units may be integrated in one unit.

When the functions are implemented in the form of a software functional unit and sold or used as an independent product, the functions may be stored in a computer-readable storage medium. Based on such an understanding, the technical solution of the present application essentially, or the part contributing to the prior art, or a part of the technical solution may be implemented in a form of a software product. The computer software product is stored in a storage medium and includes several instructions for instructing a computer device (which may be a personal computer, a server, a network device, or the like) to perform all or some of the steps of the method described in the embodiments of the present application. The foregoing storage medium includes: any medium that can store program code, such as a USB flash drive, a removable hard disk, a Read-Only Memory (ROM), a Random Access memory (RAM), a magnetic disk, an optical disc or the like.

The foregoing descriptions are merely specific implementations of the present application, but are not intended to limit the protection scope of the present application. Any variation or substitution readily conceived by a person skilled in the art within the technical scope disclosed in the present application shall fall within the protection scope of the present application. Therefore, the protection scope of the present application shall be subject to the protection scope of the claims.

## Claims

1. A resource scheduling method, comprising:
receiving, by a terminal device, downlink control information (DCI) sent by a network device, wherein the DCI is used for scheduling resources on a first bandwidth part (BWP) of the terminal device currently in an active state; and
determining, by the terminal device, a subcarrier spacing corresponding to a radio network temporary identifier (RNTI) for scrambling the DCI, wherein the subcarrier spacing corresponding to the RNTI for scrambling the DCI is a subcarrier spacing used for scheduling the resources on the first BWP.

2. The method according to claim 1, wherein before the terminal device receives the downlink control information (DCI) sent by the network device, the method further comprises:
receiving, by the terminal device, configuration parameters of the first BWP, wherein the configuration parameters comprise a plurality of subcarrier spacings, and different subcarrier spacings correspond to different RNTIs;
wherein determining, by the terminal device, the subcarrier spacing used for scheduling the resources on the first BWP according to the radio network temporary identifier (RNTI) for scrambling the DCI comprises:
determining, by the terminal device, a subcarrier spacing corresponding to the RNTI for scrambling the DCI among the plurality of subcarrier spacings.

3. The method according to claim 1, wherein before the terminal device receives the downlink control information (DCI) sent by the network device, the method further comprises:
receiving, by the terminal device, the configuration parameters of the first BWP, wherein the configuration parameters comprise a first subcarrier spacing, and the first subcarrier spacing corresponds to a first RNTI; and
receiving, by the terminal device, first configuration information, wherein the first configuration information is used for indicating at least one subcarrier spacing, the at least one subcarrier spacing corresponds to at least one RNTI one by one, and the at least one RNTI is a RNTI other than the first RNTI; wherein determining, by the terminal device, the subcarrier spacing used for scheduling the resources on the first BWP according to the radio network temporary identifier (RNTI) for scrambling the DCI comprises:
determining, by the terminal device, a subcarrier spacing corresponding to the RNTI for scrambling the DCI among the first subcarrier spacing and the at least one subcarrier spacing.

4. The method according to claim 3, wherein the at least one subcarrier spacing is configured by the network device for the first BWP.

5. The method according to claim 1, wherein before the terminal device receives the downlink control information (DCI) sent by the network device, the method further comprises:
receiving, by the terminal device, configuration parameters of the first BWP, wherein the configuration parameters comprise a first subcarrier spacing, and the first subcarrier spacing corresponds to a first RNTI; and
receiving, by the terminal device, first configuration information, wherein the first configuration information is used for indicating a mapping relationship between each subcarrier spacing in at least one subcarrier spacing and the first subcarrier spacing, the at least one subcarrier spacing corresponds to at least one RNTI one by one, and the at least one RNTI is a RNTI other than the first RNTI; wherein determining, by the terminal device, the subcarrier spacing used for scheduling the resources on the first BWP according to the radio network temporary identifier (RNTI) for scrambling the DCI comprises:
determining, by the terminal device, a subcarrier spacing corresponding to the RNTI for scrambling the DCI among the first subcarrier spacing and the at least one subcarrier spacing.

6. The method according to claim 5, wherein when the RNTI for scrambling the DCI is a second RNTI among the at least one RNTI, the method further comprises:
determining, by the terminal device, a second subcarrier spacing corresponding to the second RNTI according to the first subcarrier spacing and the mapping relationship; wherein determining, by the terminal device, the subcarrier spacing corresponding to the RNTI for scrambling the DCI among the first subcarrier spacing and the at least one subcarrier spacing comprises:
determining, by the terminal device, the second subcarrier spacing as the subcarrier spacing used for scheduling the resources on the first BWP.

7. The method according to claim 5 or 6, wherein the mapping relationship is represented by a mapping table predefined or configured by the network device, or the mapping relationship is represented by a multiple or fractional relationship predefined or configured by the network device.

8. The method according to any one of claims 3 to 7, wherein before the terminal device receives the downlink control information (DCI) sent by the network device, the method further comprises:
receiving, by the terminal device, second configuration information, wherein the second configuration information is used for indicating that the at least one RNTI is capable of being used.

9. The method according to any one of claims 3 to 8, wherein the first RNTI is different in type from the at least one RNTI, and the first RNTI is a C-RNTI.

10. The method according to any one of claims 1 to 9, wherein the first BWP is an uplink BWP or a downlink BWP.

11. A resource scheduling method, comprising:
determining, by a network device, a subcarrier spacing used for scheduling resources on a first bandwidth part (BWP) of a terminal device currently in an active state according to a type of a current service to be processed; and
sending, by the network device, downlink control information (DCI) to the terminal device, wherein the DCI is used for scheduling resources on the first BWP, and a radio network temporary identifier (RNTI) for scrambling the DCI is used for indicating the subcarrier spacing used for scheduling the resources on the first BWP.

12. The method according to claim 11, wherein before the network device sends the downlink control information (DCI) to the terminal device, the method further comprises:
sending, by the network device, configuration parameters of the first BWP to the terminal device, wherein the configuration parameters comprise a plurality of subcarrier spacings, and different subcarrier spacings correspond to different RNTIs.

13. The method according to claim 11, wherein before the network device sends the downlink control information (DCI) to the terminal device, the method further comprises:
sending, by the network device, configuration parameters of the first BWP to the terminal device, wherein the configuration parameters comprise a first subcarrier spacing, and the first subcarrier spacing corresponds to a first RNTI; and
sending, by the network device, first configuration information to the terminal device, wherein the first configuration information is used for indicating at least one subcarrier spacing, the at least one subcarrier spacing corresponds to at least one RNTI one by one, and the at least one RNTI is a RNTI other than the first RNTI.

14. The method according to claim 13, wherein the at least one subcarrier spacing is configured by the network device for the first BWP.

15. The method according to claim 11, wherein before the network device sends the downlink control information (DCI) to the terminal device, the method further comprises:
sending, by the network device, configuration parameters of the first BWP to the terminal device, wherein the configuration parameters comprise a first subcarrier spacing, and the first subcarrier spacing corresponds to a first RNTI; and
sending, by the network device, first configuration information to the terminal device, wherein the first configuration information is used for indicating a mapping relationship between each subcarrier spacing in at least one subcarrier spacing and the first subcarrier spacing, the at least one subcarrier spacing corresponds to at least one RNTI one by one, and the at least one RNTI is a RNTI other than the first RNTI.

16. The method according to claim 15, wherein the mapping relationship is represented by a mapping table predefined or configured by the network device, or the mapping relationship is represented by a multiple relationship or a fraction predefined or configured by the network device.

17. The method according to any one of claims 13 to 16, wherein before the network device sends the downlink control information (DCI) to the terminal device, the method further comprises:
sending, by the network device, second configuration information to the terminal device, wherein the second configuration information is used for indicating that the at least one RNTI is capable of being used.

18. The method according to claim 13, wherein the first RNTI is different in type from the at least one RNTI, and the first RNTI is a C-RNTI.

19. The method according to any one of claims 11 to 18, wherein determining, by a network device, the subcarrier spacing used for scheduling the resources on the first bandwidth part (BWP) of the terminal device currently in the active state according to the type of the current service to be processed, comprises:
determining, by the network device, a first subcarrier spacing as the subcarrier spacing used for scheduling the resources on the first BWP when the current service to be processed is an enhanced mobile broadband (eMBB) service; and
determining, by the network device, a second subcarrier spacing as the subcarrier spacing used for scheduling the resources on the first BWP when the current service to be processed is an Ultra Reliable & Low Latency Communication (URLLC) service, wherein the second subcarrier spacing is larger than the first subcarrier spacing.

20. The method according to any one of claims 11 to 19, wherein the first BWP is an uplink BWP or a downlink BWP.

21. A terminal device, comprising:
a receiving unit configured to receive downlink control information (DCI) sent by a network device, wherein the DCI is used for scheduling resources on a first bandwidth part (BWP) of a terminal device currently in an active state; and
a determining unit configured to determine a subcarrier spacing corresponding to a radio network temporary identifier (RNTI) for scrambling the DCI, wherein the subcarrier spacing corresponding to the RNTI for scrambling the DCI is a subcarrier spacing used for scheduling the resources on the first BWP.

22. The terminal device according to claim 21, wherein the receiving unit further comprises:
receive configuration parameters of the first BWP, wherein the configuration parameters comprise a plurality of subcarrier spacings, and different subcarrier spacings correspond to different RNTIs; wherein the determining unit is specifically configured to:
determine a subcarrier spacing corresponding to the RNTI for scrambling the DCI among the plurality of subcarrier spacings.

23. The terminal device according to claim 21, wherein the receiving unit is further configured to:
receive configuration parameters of the first BWP, wherein the configuration parameters comprise a first subcarrier spacing, and the first subcarrier spacing corresponds to a first RNTI; and
receive first configuration information, wherein the first configuration information is used for indicating at least one subcarrier spacing, and the at least one subcarrier spacing corresponds to at least one RNTI one by one, and the at least one RNTI is a RNTI other than the first RNTI;
wherein the determining unit is specifically configured to:
determine the subcarrier spacing corresponding to the RNTI for scrambling the DCI among the first subcarrier spacing and the at least one subcarrier spacing.

24. The terminal device according to claim 23, wherein the at least one subcarrier spacing is configured by the network device for the first BWP.

25. The terminal device according to claim 21, wherein the receiving unit is further configured to:
receive configuration parameters of the first BWP, wherein the configuration parameters comprise a first subcarrier spacing, and the first subcarrier spacing corresponds to a first RNTI; and
receive first configuration information, wherein the first configuration information is used for indicating a mapping relationship between each subcarrier spacing in at least one subcarrier spacing and the first subcarrier spacing, the at least one subcarrier spacing corresponds to at least one RNTI one by one, and the at least one RNTI is a RNTI other than the first RNTI;
wherein the determining unit is specifically configured to:
determine the subcarrier spacing corresponding to the RNTI for scrambling the DCI among the first subcarrier spacing and the at least one subcarrier spacing.

26. The terminal device according to claim 25, wherein when the RNTI for scrambling the DCI is a second RNTI among the at least one RNTI, the determining unit is further configured to:
determine a second subcarrier spacing corresponding to the second RNTI according to the first subcarrier spacing and the mapping relationship; wherein the determining unit is specifically configured to:
determine the second subcarrier spacing as the subcarrier spacing used for scheduling the resources on the first BWP.

27. The terminal device according to claim 25 or 26, wherein the mapping relationship is represented by a mapping table predefined or configured by the network device, or the mapping relationship is represented by a multiple or fractional relationship predefined or configured by the network device.

28. The terminal device according to any one of claims 23 to 27, wherein the receiving unit is further configured to:
receive second configuration information, wherein the second configuration information is used for indicating that the at least one RNTI is capable of being used.

29. The terminal device according to any one of claims 23 to 28, wherein the first RNTI is different in type from the at least one RNTI, and the first RNTI is a C-RNTI.

30. The terminal device according to any one of claims 21 to 29, wherein the first BWP is an uplink BWP or a downlink BWP.

31. A network device, comprising:
a determining unit configured to determine a subcarrier spacing used for scheduling resources on a first bandwidth part (BWP) of a terminal device currently in an active state according to a type of a current service to be processed; and
a sending unit configured to send downlink control information (DCI) to the terminal device, wherein the DCI is used for scheduling the resources on the first BWP, and a radio network temporary identifier (RNTI) for scrambling the DCI is used for indicating a subcarrier spacing used for scheduling the resources on the first BWP.

32. The network device according to claim 31, wherein the sending unit is further configured to:
send configuration parameters of the first BWP to the terminal device, wherein the configuration parameters comprise a plurality of subcarrier spacings, and different subcarrier spacings correspond to different RNTIs.

33. The network device according to claim 31, wherein the sending unit is further configured to:
send configuration parameters of the first BWP to the terminal device, wherein the configuration parameters comprise a first subcarrier spacing, and the first subcarrier spacing corresponds to a first RNTI; and
send first configuration information to the terminal device, wherein the first configuration information is used for indicating at least one subcarrier spacing, and the at least one subcarrier spacing corresponds to at least one RNTI, and the at least one RNTI is a RNTI other than the first RNTI.

34. The network device according to claim 33, wherein the at least one subcarrier spacing is configured by the network device for the first BWP.

35. The network device according to claim 31, wherein the sending unit is further configured to:
send configuration parameters of the first BWP to the terminal device, wherein the configuration parameters comprise a first subcarrier spacing, and the first subcarrier spacing corresponds to a first RNTI; and
send first configuration information to the terminal device, wherein the first configuration information is used for indicating a mapping relationship between each subcarrier spacing in at least one subcarrier spacing and the first subcarrier spacing, the at least one subcarrier spacing corresponds to at least one RNTI one by one, and the at least one RNTI is a RNTI other than the first RNTI.

36. The network device according to claim 35, wherein the mapping relationship is represented by a mapping table predefined or configured by the network device, or the mapping relationship is represented by a multiple or fractional relationship predefined or configured by the network device.

37. The network device according to any one of claims 33 to 36, wherein the sending unit is further configured to:
send second configuration information to the terminal device, wherein the second configuration information is used for indicating that the at least one RNTI is capable of being used.

38. The network device according to any one of claims 13 to 17, wherein the first RNTI is different in type from the at least one RNTI, and the first RNTI is a C-RNTI.

39. The network device according to any one of claims 31 to 38, wherein the determination unit is specifically configured to:
determine a first subcarrier spacing as the subcarrier spacing used for scheduling the resources on the first BWP when the current service to be processed is an enhanced mobile broadband (eMBB) service; and
determine a second subcarrier spacing as the subcarrier spacing used for scheduling the resources on the first BWP when the current service to be processed is an Ultra Reliable & Low Latency Communication (URLLC) service, wherein the second subcarrier spacing is larger than the first subcarrier spacing.

40. The network device according to any one of claims 31 to 39, wherein the first BWP is an uplink BWP or a downlink BWP.

41. A terminal device, comprising: a processor and a memory, wherein the memory is configured to store a computer program, and the processor is configured to call and run the computer program stored in the memory to perform the method according to any one of claims 1 to 10.

42. A network device, comprising a processor and a memory, wherein the memory is configured to store a computer program, and the processor is configured to call and run the computer program stored in the memory to perform the method according to any one of claims 11 to 20.

43. A chip, comprising: a processor configured to call and run a computer program from a memory, to enable a device in which the chip is installed to perform the method according to any one of claims 1 to 10.

44. A chip, comprising: a processor configured to call and run a computer program from a memory, to enable a device in which the chip is installed to perform the method according to any one of claims 11 to 20.

45. A computer readable storage medium, configured to store a computer program, wherein the computer program enables a computer to perform the method according to any one of claims 1 to 10.

46. A computer readable storage medium, configured to store a computer program, wherein the computer program enables a computer to perform the method according to any one of claims 11 to 20.

47. A computer program product, comprising computer program instructions, wherein the computer program instructions enable a computer to perform the method according to any one of claims 1 to 10.

48. A computer program product, comprising computer program instructions, wherein the computer program instructions enable a computer to perform the method according to any one of claims 11 to 20.

49. A computer program, wherein the computer program enables a computer to perform the method according to any one of claims 1 to 10.

50. A computer program, wherein the computer program enables a computer to perform the method according to any one of claims 11 to 20.
